# EUROPEAN PATENT SPECIFICATION

(11) **EP 0 725 370 B1**
(45) Date of publication and mention of the grant of the patent: **23.05.2007**
(21) Application number: 96300581.4
(22) Date of filing: 26.01.1996
(51) Int. Cl.: G07B 17/00, G01G 17/04

(54) **Franking machine in combination with weighscale**
Frankiermaschine in Kombination mit einer Waagschale
Machine à timbrer en combinaison avec un plateau de la balance

(30) Priority: 31.01.1995 GB 9501850
(43) Date of publication of application: 07.08.1996
(73) Proprietor: NEOPOST LIMITED, Romford, Essex RM1 2AR (GB)
(72) Inventor: Herbert, Raymond J., Leigh-on-Sea, Essex SS9 3PP (GB)
(74) Representative: Boden, Keith McMurray

(56) References cited:
- EP-A- 0 703 084
- EP-A2- 0 336 589
- GB-A- 2 235 656
- US-A- 4 852 604
- US-A- 4 868 757
- PATENT ABSTRACTS OF JAPAN vol. 011, no. 203 (P-591) 02 July 1987 & JP 62 025 216 A (YOKOGAWA ELECTRIC CORP) 03 February 1987

## Description

This invention relates to franking machines and in particular to the use of weighscales in combination with franking machines.

Known electronic franking machines include electronic circuits for carrying out accounting functions in relation to values of postage charges in respect of mail items and for maintaining accounting records relating to an amount of credit available for use in franking mail items and to other accounting items relating to use of the franking machine in franking mail items. The electronic circuits also carry out control functions in respect of operation of the franking machine to feed mail items through the machine past a print head of the franking machine and in respect of setting and operating the print head to print a required value of postage charge for which accounting functions have been carried out.

The value of postage charge relating to a mail item usually is dependent inter alia upon the weight of the item and hence it is common to provide a weighscale alongside the franking machine to enable a user to determine an appropriate value of postage charge in respect of each item to be franked. While the weighscale may operate independently of the franking machine, it is often preferred that the weighscale be operated in conjunction with the franking machine. The weighscale is constructed and operable to output to, the franking machine, a weight signal representing the weight of a mail item supported on a scale pan of the weighscale. The franking machine accepts the weight signal from the weighscale and utilises the weight signal to determine the value of postage charge applicable to the item on the scale pan.

The present invention is concerned with utilising the weighscale and franking machine to perform additional functions.

EP-A-0336589 discloses a franking machine which includes printing means for printing franking impressions on articles, such as letters, and a weighing pan for weighing the articles such as to allow the appropriate postage charges to be determined.

Document JP 62-025216 discloses a recording pen mechanism which determines when the ink supply of the pen is running short of ink. The determination of the residual quantity of ink in the ink supply is performed using a pressure sensor, where the pressure as applied to this sensor is related to the weight of the ink available to the recording pen.

In one aspect the present invention provides a combination of a franking machine and weighscale means for weighing mail items to be franked by said franking machine, wherein said franking machine includes electronic circuit means for performing accounting and control functions in relation to franking of mail items, printing means for printing franking impressions on said mail items and a replaceable ink supply containing ink for supply of ink to said printing means; said ink in said ink supply being gradually depleted as franking impressions are printed by said printing means; characterised in that said weighscale means is operable to output a weight signal representing a weight of said ink supply when removed from said printing means and located on said weighscale means, said electronic circuit means includes memory means storing data relating to a weight of said ink supply, and said electronic circuit means is operative in response to said weight signal to determine a quantity of ink remaining in said ink supply.

Preferably, said franking machine includes display means, and said electronic circuit means is operative to display an indication of said quantity of ink remaining in said ink supply.

More preferably, said indication of said quantity of ink remaining in said ink supply is displayed as a percentage of said ink supply when fully loaded with ink.

Preferably, said electronic circuit means is operative in response to a determination that said ink is depleted to a predetermined quantity to display an indication that said ink supply requires replacement.

More preferably, said electronic circuit means is responsive to mounting on said printing means of an ink supply fully loaded with ink and operative in response to a determination that said ink is depleted to a predetermined quantity to inhibit further operation of said franking machine until said ink supply is replaced with a fully-loaded ink supply.

In another aspect the present invention provides a method of determining a level of ink remaining in a replaceable ink supply for printing means of a combined franking machine and weighscale means, where the weighscale means is for weighing mail items to be franked by the franking machine, in which a quantity of ink in said ink supply is gradually depleted as franking operations are performed, characterised by the steps of: storing data relating to a weight of said ink supply containing at least one known quantity of ink therein; removing said ink supply from said printing means; weighing said ink supply when removed from said printing means and located on said weighscale means, and inputting a weight signal to said franking machine representing a weight of said ink supply containing an unknown quantity of ink; and comparing said weight signal with said stored data to determine said quantity of ink remaining in said ink supply.

An embodiment of the invention will be described hereinafter with reference to the drawings, in which:

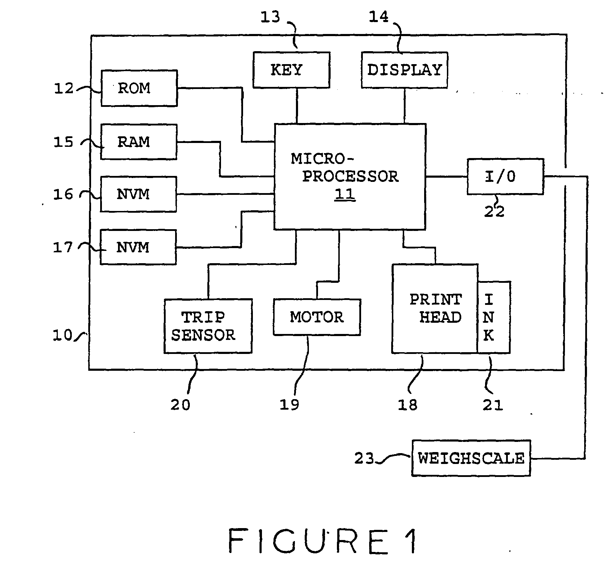

Figure 1 is a block diagram of a franking machine and weighscale, and
Figure 2 is a flow chart illustrating the checking of ink remaining in an ink supply.

Referring now to the drawing, the franking machine 10 includes a micro-processor 11 operating under program routines stored in a read only memory (ROM) 12. As is well known in electronic franking machines, a keyboard 13 is provided for input of data by a user and a display 14 is provided to enable display of information to the user. A random access memory (RAM) 15 is provided for use as a working store for storage of temporary data during operation of the franking machine. Non-volatile duplicated memories 16, 17 are provided for the storage of data which is required to be retained even when the franking machine is not powered. Accounting data relating to use of the franking machine for printing franking impressions representing postage charges for mail items and any other critical data to be retained is stored in the non-volatile memories 16, 17. A print head 18 having a print drum selectively rotatable by a motor 19 is provided for printing franking impressions on mail items. The print drum carries a print die for printing an invariable pattern forming a part of the franking impression and, if desired, a further print die for printing slogan or other information alongside the franking impression. The print drum also carries two sets of print wheels for printing variable data in the franking impression. The print wheels have type characters located on the peripheries of the wheels and are disposed on the drum such that a required type character of each wheel may be brought into an exposed position so that the required character is printed in a printing operation. A first set of print wheels prints a required postage charge in respect of a mail item being franked and a second set of print wheels prints the date on which the franking impression is printed. Generally the second set of print wheels are set manually to print the required date. However the first set of print wheels which print a postage charge are set by means controlled by the microprocessor 11.

When it is desired to frank a mail item, a required postage charge for the mail item is input on the keyboard 13 and the microprocessor carries out accounting functions, including checking that sufficient credit is available for the required postage charge, and sets the first set of print wheels of the print head for printing a franking impression including the required postage charge. The mail item is fed into the franking machine and the leading edge of the mail item is sensed by a trip sensor 20. The trip sensor 20 provides a signal to the microprocessor 11 to initiate printing of the franking impression and to update the accounting records to take account of the value of the postage charge to be printed. Feeding means of the franking machine feed the mail item to the print head and the microprocessor initiates rotation of the print drum by the motor 19. Upon rotation of the print drum, the print dies and the exposed type characters of the print wheels are inked by an ink supply 21 so as to coat the dies and type characters with ink. Continued rotation of the print drum by the motor 19 causes the inked dies and type characters to be brought into printing engagement with a surface of the mail item whereby printing of the franking impression and the slogan is effected. Generally the ink supply comprises a replaceable inking roller of porous material the pores of which contain ink. The print dies and type characters make rolling engagement with the inking roller and during this engagement ink is transferred from the pores of the inking roller to the print dies and type characters. It will be appreciated that ink contained in the pores of the inking roller is depleted by each printing operation. Eventually the amount of ink contained in the inking roller is insufficient to properly ink the print dies and type characters and consequently if printing of a franking impression is attempted only an imperfect impression is obtained. Accordingly it is necessary for a user of the franking machine to check the quality of the printed impression and to replace the depleted inking roller with a new inked roller prior to the visible quality of the printed impression decreasing to an unacceptable quality.

The franking machine is provided with a communication port 22 to enable communication between the microprocessor 11 of the franking machine and other devices. The postage charge in respect of a mail item is usually dependent upon the weight of the mail item and hence it is common to provide a weighscale 23 adjacent to the franking machine to enable mail items to be weighed so as to determine the appropriate postage charge prior to inputting the postage charge to the franking machine. The weighscale may be constructed to output a signal representing the weight of an item on the weighscale and this signal may be input directly to the franking machine by connecting the output of the weighscale to the communication port 22. The microprocessor 11 is programmed to calculate the postage charge required for the item being weighed in dependence upon the weight signal from the weighscale and to utilise the calculated postage charge as the postage charge to be accounted for and printed in a franking operation. Accordingly the user of the franking machine is saved from entering the required postage charge on the keyboard 13.

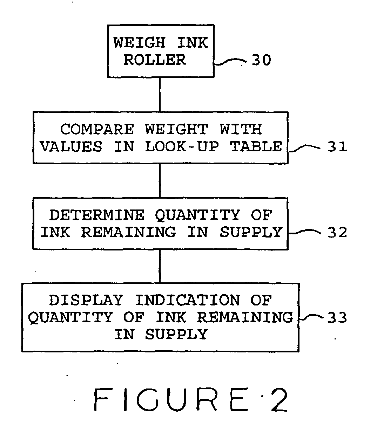

It is now proposed to utilise the weighscale and franking machine to determine the quantity of ink remaining in the inking roller of the franking machine and to provide an indication to the user of the franking machine when the quantity of ink remaining in the inking roller has been depleted to such an extent that replacement of the inking roller is necessary. The franking machine stores in a look-up table in non-volatile memory values of the weight of a new inking roller fully loaded with ink and the weight of an inking roller when depleted of ink to such an extent that the printed impression is still of acceptable quality but that if further impressions are printed, such further impressions are likely to be of unacceptable quality. In an inking roller check operation, illustrated by the flow chart of Figure 2, the inking roller is removed from the print head of the franking machine and is placed on the scale pan of the weighscale to weigh (box 30) the inking roller together with ink contained in the inking roller. The microprocessor 11 is operable under a program routine stored in ROM 12 to accept an output signal from the weighscale and to compare (box 31) the weight signal with the values stored in the look-up table and determines (box 32) the quantity of ink remaining in the inking roller. From this determination, the microprocessor displays (box 33) on display 14 an indication relating to the quantity of ink remaining in the inking roller. This indication may comprise a percentage rating or may comprise a number of franking printing operations which can still be performed before replacement of the inking roller becomes necessary. The look-up table may contain values relating to fully loaded and depleted inking rollers as described hereinbefore or may contain in addition a plurality of values of weights of the inking roller for ink quantities intermediate fully loaded and depleted.

If desired, the print head of the franking machine may be provided with means whereby the microprocessor is enabled to detect when a new unused inking roller is mounted on the print head. The microprocessor may then be programmed to inhibit further operation of the franking machine, after determination that the ink in the inking roller has been depleted to an extent that further printing impressions cannot reliably be produced, until a new unused inking roller is mounted on the print head.

The print head and ink supply have been described hereinbefore as a rotatable print drum and an inking roller respectively. However determination of an ink supply of other types of print head with other forms of ink supply may be carried out in a similar manner. For example ink jet print heads are known which contain an integral liquid ink supply and the entire print head and ink supply is replaced when the ink has been depleted. Accordingly the look-up table contains data relating to the values of weight of the print head when fully loaded with ink and when depleted of ink. Determination of the ink supply remaining in the print head is effected by removing the print head from the franking machine and placing on the scalepan of the weighscale. The output signal from the weighscale is then utilised as described hereinbefore to determine the quantity of ink remaining in the print head.

## Claims

1. A combination of a franking machine (10) and weighscale means (23) for weighing mail items to be franked by said franking machine (10), wherein said franking machine (10) includes electronic, circuit means (11) for performing accounting and control functions in relation to franking of mail items, printing means (18) for printing franking impressions on said mail items and a replaceable ink supply (21) containing ink for supply of ink to said printing means (18), said ink in said ink supply (21) being gradually depleted as franking impressions are printed by said printing means (18); **characterised in that** said weighscale means (23) is operable to output a weight signal representing a weight of said ink supply (21) when removed from said printing means (18) and located on said weighscale means (23), said electronic circuit means (11) includes memory means (16, 17) storing data relating to a weight of said ink supply (21), and said electronic circuit means (11) is operative in response to said weight signal to determine a quantity of ink remaining in said ink supply (21).

2. The combination of claim 1, wherein said franking machine (10) includes display means (14), and said electronic circuit means (11) is operative to display an indication of said quantity of ink remaining in said ink supply (21).

3. The combination of claim 2, wherein said indication of said quantity of ink remaining in said ink supply (21) is displayed as a percentage of said ink supply (21) when fully loaded with ink.

4. The combination of claim 2 or 3, wherein said electronic circuit means (11) is operative in response to a determination that said ink is depleted to a predetermined quantity to display an indication that said ink supply (21) requires replacement.

5. The combination of claim 4, wherein said electronic circuit means (11) is responsive to mounting on said printing means (18) of an ink supply (21) fully loaded with ink and operative in response to a determination that said ink is depleted to a predetermined quantity to inhibit further operation of said franking machine (10) until said ink supply (21) is replaced with a fully-loaded ink supply (21).

6. A method of determining a level of ink remaining in a replaceable ink supply (21) for printing means (18) of a combined franking machine (10) and weighscale means (23), where the weighscale means (23) is for weighing mail items to be franked by the franking machine (10), in which a quantity of ink in said ink supply (21) is gradually depleted as franking operations are performed, **characterised by** the steps of:
storing data relating to a weight of said ink supply (21) containing at least one known quantity of ink therein;
removing said ink supply (21) from said printing means (18) ;
weighing (30) said ink supply (21) when removed from said printing means (18) and located on said weighscale means (23), and inputting a weight signal to said franking machine (10) representing a weight of said ink supply (21) containing an unknown quantity of ink; and
comparing (31) said weight signal with said stored data to determine (32) said quantity of ink remaining in said ink supply (21).

## Patentansprüche

1. Kombination aus einer Frankiermaschine (10) und einem Waagemittel (23) zum Wiegen von Postsendungen, die mit der Frankiermaschine (10) frankiert werden sollen, wobei die Frankiermaschine (10) ein elektronisches Schaltungsmittel (11) zur Durchführung von Buchhaltungs- und Steuerfunktionen bezüglich der Frankierung von Postsendungen aufweist, ein Druckermittel (18) zum Drucken von Freistempeln auf die Postsendungen und einen auswechselbaren Tintenvorrat (21), welcher Tinte zur Zuführung an das Druckermittel (18) enthält, wobei die Tinte im Tintenvorrat (21) im Laufe des Aufdrucks von Freistempeln mit dem Druckermittel (18) allmählich zu Ende geht; **dadurch gekennzeichnet, dass** das Waagemittel (23) derart betrieben werden kann, dass es bei aus dem Druckermittel (18) entferntem und auf der Waagevorrichtung (23) angeordnetem Tintenvorrat (21) ein Gewichtssignal abgibt, welches ein Gewicht des Tintenvorrats (21) darstellt, wobei das elektronische Schaltungsmittel (11) ein Speichermittel (16, 17) aufweist, in dem Daten bezüglich eines Gewichts des Tintenvorrats (21) gespeichert sind, und dass das elektronische Schaltungsmittel (11) als Reaktion auf das Gewichtssignal aktiv wird, um eine im Tintenvorrat (21) noch vorhandene Tintenrestmenge zu bestimmen.

2. Kombination nach Anspruch 1, bei der die Frankiermaschine (10) ein Anzeigemittel (14) aufweist, und das elektronische Schaltungsmittel (11) derart betrieben werden kann, dass es eine Mengenangabe des im Tintenvorrat (21) noch vorhandenen Tintenrests anzeigt.

3. Kombination nach Anspruch 2, bei der die Mengenangabe des im Tintenvorrat (21) noch vorhandenen Tintenrests als Prozentsatz des vollständig mit Tinte gefüllten Tintenvorrats (21) angezeigt wird.

4. Kombination nach Anspruch 2 oder 3, bei der das elektronische Schaltungsmittel (11) als Reaktion auf eine Feststellung, dass die Tinte bis auf eine vorbestimmte Menge aufgebraucht ist, zur Anzeige einer Meldung aktiv wird, dass der Tintenvorrat (21) ausgewechselt werden muss.

5. Kombination nach Anspruch 4, **dadurch gekennzeichnet, dass** das elektronische Schaltungsmittel (11) auf das Anbringen eines vollständig mit Tinte gefüllten Tintenvorrats (21) am Druckermittel (18) anspricht und als Reaktion auf eine Feststellung, dass die Tinte bis auf eine vorbestimmte Menge aufgebraucht ist, aktiv wird, um einen weiteren Betrieb der Frankiermaschine (10) zu verhindern, bis der Tintenvorrat (21) wieder durch einen vollständig gefüllten Tintenvorrat (21) ersetzt wird.

6. Verfahren zur Bestimmung eines in einem auswechselbaren Tintenvorrat (21) für ein Druckermittel (18) einer Kombination aus Frankiermaschine (10) und Waagevorrichtung (23) vorhandenen Tintenrestfüllstands, wobei die Waagevorrichtung (23) zum Wiegen von Postsendungen dient, welche mit der Frankiermaschine (10) frankiert werden sollen, bei der bei der Durchführung von Frankiervorgängen eine Tintenmenge im Tintenvorrat (21) allmählich aufgebraucht wird, **gekennzeichnet durch** folgende Schritte:
Speichern von Daten bezüglich eines Gewichts des Tintenvorrats (21), welcher mindestens eine bekannte Tintenmenge enthält,
Entfernen des Tintenvorrats (21) aus dem Druckermittel (18);
Wiegen (30) des Tintenvorrats (21) im aus dem Druckermittel (18) entfernten und auf der Waagevorrichtung (23) angeordneten Zustand und Eingabe eines Gewichtssignals in die Frankiermaschine (10), das ein Gewicht des Tintenvorrats (21) darstellt, welcher eine unbekannte Tintenmenge enthält; und
Vergleichen (31) dieses Gewichtssignals mit den gespeicherten Daten zur Bestimmung (32) der im Tintenvorrat (21) noch vorhandenen Tintenrestmenge.

## Revendications

1. Combinaison d'une machine à timbrer (10) et d'une balance de pesée (23) pour peser du courrier devant être affranchis par ladite machine à timbrer (10), dans laquelle ladite machine à timbrer (10) comprend un moyen de circuit électronique (11) pour effectuer des fonctions de calcul et de contrôle en rapport à l'affranchissement du courrier, des moyens d'impression (18) pour imprimer des timbres sur ledit courrier et une alimentation en encre remplaçable (21) contenant de l'encre pour fournir de l'encre aux dits moyens d'impression (18), ladite encre dans ladite alimentation en encre (21) se vidant graduellement au fur et à mesure que les timbres sont imprimés par lesdits moyens d'impression (18) ; **caractérisée en ce que** ladite balance de pesée (23) fonctionne pour fournir en sortie un signal représentant un poids de ladite alimentation en encre (21) quand elle est retirée des moyens d'impression (18) et placée sur ladite balance de pesée (23), ledit moyen de circuit électronique (11) comprend des mémoires (16, 17) pour mémoriser des données concernant un poids de ladite alimentation en encre (21) et ledit moyen de circuit électronique (11) fonctionne en réponse au dit signal de poids pour déterminer une quantité d'encre restant dans ladite alimentation en encre (21).

2. Combinaison selon la revendication 1, dans laquelle ladite machine à timbrer (10) comprend des moyens d'affichage (14) et ledit moyen de circuit électronique (11) fonctionne pour afficher une indication de ladite quantité d'encre restant dans ladite alimentation en encre (21).

3. Combinaison selon la revendication 2, dans laquelle ladite indication de ladite quantité d'encre restant dans ladite alimentation en encre (21) est affichée comme un pourcentage de ladite alimentation en encre (21) quand elle est entièrement remplie d'encre.

4. Combinaison selon la revendication 2 ou 3, dans laquelle ledit moyen de circuit électronique (11) fonctionne en réponse à une détermination jugeant si ladite encre est réduite à une certaine quantité prédéterminée pour afficher une indication signalant que ladite alimentation en encre (21) doit être remplacée.

5. Combinaison selon la revendication 4, dans laquelle ledit moyen de circuit électronique (11) est sensible au placement d'une alimentation en encre (21) entièrement remplie d'encre sur lesdits moyens d'impression (18) et fonctionne en réponse à une détermination jugeant si ladite encre est réduite à une quantité prédéterminée pour empêcher le fonctionnement de ladite machine à timbrer (10) jusqu'à ce que ladite alimentation en encre (21) soit remplacée par une alimentation en encre entièrement remplie d'encre (21).

6. Procédé de détermination d'un niveau d'encre restant dans une alimentation en encre remplaçable (21) pour des moyens d'impression (18) d'une combinaison de machine à timbrer (10) et d'une balance de pesée (23), où la balance de pesée (23) est destinée à peser du courrier devant être affranchi par la machine à timbrer (10), dans laquelle une quantité d'encre dans ladite alimentation en encre (21) est graduellement épuisée au fur et à mesure que les opérations d'affranchissement sont effectuées, **caractérisé par** les étapes suivantes consistant à :
mémoriser des données concernant un poids de ladite alimentation en encre (21) contenant au moins une quantité connue d'encre dans celle-ci ;
retirer ladite alimentation en encre (21) desdits moyens d'impression (18) ;
peser (30) ladite alimentation en encre (21) quand elle est retirée des moyens d'impression (18) et placée sur ladite balance de pesée (23), et fournir en entrée un signal de poids à ladite machine à timbrer (10) représentant un poids de ladite alimentation en encre (21) contenant une quantité inconnue d'encre ; et comparer (31) ledit signal de poids aux dites données mémorisées pour déterminer (32) ladite quantité d'encre restant dans ladite alimentation en encre (21).
